(19) **Europäisches Patentamt European Patent Office Office européen des brevets**

(11) **EP 4 682 203 A1**

(12) **EUROPEAN PATENT APPLICATION**
published in accordance with Art. 153(4) EPC

(43) Date of publication:
**21.01.2026 Bulletin 2026/04**

(21) Application number: **24770724.3**

(22) Date of filing: **07.03.2024**

(51) International Patent Classification (IPC):
*C08L 67/04* (2006.01)    *B29C 48/15* (2019.01)
*B32B 27/10* (2006.01)    *B32B 27/36* (2006.01)
*C08J 5/22* (2006.01)

(52) Cooperative Patent Classification (CPC):
**B29C 48/15; B32B 27/10; B32B 27/36; C08J 5/22; C08L 67/04**

(86) International application number:
**PCT/JP2024/008837**

(87) International publication number:
**WO 2024/190618 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.03.2023 JP 2023038440**

(71) Applicant: **Kaneka Corporation**
**Osaka-shi, Osaka 530-8288 (JP)**

(72) Inventors:
• **KUBOTA, Tomofumi**
  **Osaka 566-0072 (JP)**
• **OKADA, Yasunori**
  **Osaka 566-0072 (JP)**
• **ENOMOTO, Yuta**
  **Osaka 566-0072 (JP)**

(74) Representative: **Vossius & Partner**
**Patentanwälte Rechtsanwälte mbB**
**Siebertstrasse 3**
**81675 München (DE)**

(54) **RESIN COMPOSITION, FILM, LAYERED PRODUCT, AND METHOD FOR PRODUCING SAME**

(57)    A resin composition contains: a copolymer (A) that is a copolymer of 3-hydroxybutyrate units and other hydroxyalkanoate units and in which the proportion of the other hydroxyalkanoate units is 24 mol% or more; a copolymer (B) that is a copolymer of 3-hydroxybutyrate units and other hydroxyalkanoate units and in which the proportion of the other hydroxyalkanoate units is from 1 to less than 5 mol%; and a copolymer (C) that is a copolymer of 3-hydroxybutyrate units and other hydroxyalkanoate units and in which the proportion of the other hydroxyalkanoate units is from 5 to less than 24 mol%. The copolymer (A) has a weight-average molecular weight of $10 \times 10^4$ to $50 \times 10^4$. At least one or all of the copolymers (A), (B), and (C) are reaction products resulting from a reaction with an organic peroxide.

EP 4 682 203 A1

## Description

### Technical Field

The present invention relates to a poly(3-hydroxyalkanoate) resin-containing resin composition or film, a laminate including a lamination layer of the resin composition, and methods for producing the film and laminate.

### Background Art

A huge amount of petroleum-based plastics are discarded every year. The huge amount of waste plastics have brought about the problems of a shortage of landfill sites and environmental pollution, and these problems have become a serious concern. In addition, microplastics have recently caused significant harm to the marine environment, and there is a demand for widespread use of biodegradable plastics which are degradable in the natural environment.

Various kinds of such biodegradable plastics are known (Patent Literature 1). Among others, polyhydroxyalkanoate (hereinafter also referred to as PHA) resins, in particular poly(3-hydroxyalkanoate) (hereinafter also referred to as P3HA) resins, have excellent degradability in seawater and are attracting attention. Examples of these resins include poly(3-hydroxybutyrate) homopolymer resin (hereinafter also referred to as P3HB), poly(3-hydroxybutyrate-co-3-hydroxyvalerate) resin (hereinafter also referred to as P3HB3HV), poly(3-hydroxybutyrate-co-3-hydroxyhexanoate) copolymer resin (hereinafter also referred to as P3HB3HH), and poly(3-hydroxybutyrate-co-4-hydroxybutyrate) copolymer resin (hereinafter also referred to as P3HB4HB).

A laminate produced by laminating a biodegradable substrate such as paper with a PHA is very promising in terms of environmental protection because both the resin and the substrate are materials having excellent biodegradability. Choices of lamination methods include: a method consisting of introducing a PHA resin into an extruder equipped with a T-die, processing the PHA into a film by the extruder, and then laminating a substrate with the film; and an extrusion lamination method that does not involve film formation but in which a PHA resin melted by equipment similar to the T-die-equipped extruder is extruded onto a substrate fed separately from the PHA resin to laminate the substrate directly with the PHA resin.

Patent Literature 2 discloses a resin film containing a reaction product of a resin component and a given amount of organic peroxide. The resin component includes P3HB3HH (A) in which the proportion of 3-hydroxyhexanoate units is from 1 to 6 mol% and P3HB3HH (B) in which the proportion of 3-hydroxyhexanoate units is 24 mol% or more. The literature teaches that the resin film has good mechanical properties and high blocking resistance and can be produced at high productivity.

### Citation List

### Patent Literature

PTL 1: Japanese Laid-Open Patent Application Publication No. 2010-200697
PTL 2: WO 2022/044836 A1

### Summary of Invention

### Technical Problem

An investigation by the present inventors has revealed that there is room for improvement in processing of a P3HA resin into a film by means of a T-die-equipped extruder (this process will be hereinafter also referred to as T-die film formation) or extrusion lamination in which a lamination layer of a P3HA resin is formed directly on a substrate; specifically, increasing the processing speed to improve the productivity causes a thickness variation of the film or lamination layer in the flow direction (hereinafter also referred to as the MD direction) or leads to the film or lamination layer having a length smaller than the die width (suffering from a significant extent of neck-in) in the TD direction (perpendicular to the MD direction).

In view of the above circumstances, the present invention aims to provide a P3HA resin composition the use of which in T-die film formation or extrusion lamination can reduce the thickness variation of the resulting film or lamination layer or the neck-in of the film or lamination layer in the TD direction even when the T-die film formation or extrusion lamination is performed at an increased production speed.

**Solution to Problem**

As a result of intensive studies with the goal of solving the above problem, the present inventors have found that the use of a P3HA resin composition meeting the following requirements in T-die film formation or extrusion lamination can reduce the thickness variation of the resulting film or lamination layer or the neck-in of the film or lamination layer in the TD direction even when the T-die film formation or extrusion lamination is performed at an increased production speed: the P3HA resin composition is composed of three P3HB copolymers each of which contains a given proportion of comonomer; the molecular weight of the copolymer containing the highest proportion of hydroxyalkanoate units other than 3HB units is controlled in a given range; and at least one of the three P3HB copolymers is a reaction product resulting from a reaction with an organic peroxide. Based on this finding, the inventors have completed the present invention.

Specifically, the present invention relates to a resin composition containing a poly(3-hydroxyalkanoate) resin component, wherein

the poly(3-hydroxyalkanoate) resin component includes:

a copolymer (A) that is a copolymer of 3-hydroxybutyrate units and other hydroxyalkanoate units and in which a proportion of the other hydroxyalkanoate units is 24 mol% or more;
a copolymer (B) that is a copolymer of 3-hydroxybutyrate units and other hydroxyalkanoate units and in which a proportion of the other hydroxyalkanoate units is from 1 to less than 5 mol%; and
a copolymer (C) that is a copolymer of 3-hydroxybutyrate units and other hydroxyalkanoate units and in which a proportion of the other hydroxyalkanoate units is from 5 to less than 24 mol%,

the copolymer (A) has a weight-average molecular weight of $10 \times 10^4$ to $50 \times 10^4$, and
at least one or all of the copolymers (A), (B), and (C) are reaction products resulting from a reaction with an organic peroxide.

The present invention also relates to a film containing the resin composition and to a laminate including a lamination layer containing the resin composition and a substrate layer. The laminate may be a molded article.

The present invention further relates to a film production method including the step of molding the resin composition by melt extrusion using a T-die. The present invention further relates to a laminate production method for producing the laminate, the laminate production method including the step of forming the lamination layer on at least one side of the substrate layer by extrusion lamination. The present invention further relates to a laminate production method including the steps of: molding the resin composition into a film; and placing the film on at least one side of the substrate layer and forming the lamination layer by dry lamination, non-solvent lamination, or thermal lamination.

**Advantageous Effects of Invention**

The use of the present invention in T-die film formation or extrusion lamination can reduce the thickness variation of the resulting film or lamination layer or the neck-in of the film or lamination layer in the TD direction even when the T-die film formation or extrusion lamination is performed at an increased production speed. Thus, a film uniform in thickness and width or a laminate including a lamination layer uniform in thickness and width can be produced at high productivity.

In addition, the use of the laminate allows for high-yield production of films or laminates of constant quality.

**Description of Embodiments**

Hereinafter, an embodiment of the present invention will be described. The present invention is not limited to the embodiment described below.

A resin composition according to the present embodiment is a resin composition containing a poly(3-hydroxyalkanoate) resin as an essential component.

[Poly(3-Hydroxyalkanoate) (P3HA) Resin]

The poly(3-hydroxyalkanoate) resin contained in the resin composition according to the present embodiment is a polyhydroxyalkanoate which is a biodegradable aliphatic polyester (polyester containing no aromatic ring) and which contains 3-hydroxyalkanoic acid repeating units represented by the formula [-CHR-CH$_2$-CO-O-] (wherein R is an alkyl group represented by $C_nH_{2n+1}$ and n is an integer from 1 to 15). The poly(3-hydroxyalkanoate) resin preferably contains 50 mol% or more, more preferably 70 mol% or more, of the repeating units in the total monomer repeating units (100 mol%).

Among P3HA resins, a poly(3-hydroxybutyrate) resin (hereinafter also referred to as a "P3HB resin") is preferred for use because, for example, this resin is particularly easy to obtain and process.

The P3HB resin is an aliphatic polyester resin that can be microbially produced and that contains 3-hydroxybutyrate (hereinafter also referred to as "3HB") as repeating units. The P3HB resin may be poly(3-hydroxybutyrate) containing only 3HB as repeating units or may be a copolymer of 3-hydroxybutyrate and another hydroxyalkanoate. In the present embodiment, the P3HB resin includes at least three copolymers differing in the proportions of the constituent monomers.

Specific examples of the P3HA resin include poly(3-hydroxybutyrate), poly(3-hydroxybutyrate-co-3-hydroxyhexanoate) (hereinafter also referred to as "P3HB3HH"), poly(3-hydroxybutyrate-co-3-hydroxyvalerate) (hereinafter also referred to as "P3HB3HV"), poly(3-hydroxybutyrate-co-4-hydroxybutyrate), poly(3-hydroxybutyrate-co-3-hydroxyoctanoate), and poly(3-hydroxybutyrate-co-3-hydroxyoctadecanoate). Among these, poly(3-hydroxybutyrate), poly(3-hydroxybutyrate-co-3-hydroxyhexanoate), poly(3-hydroxybutyrate-co-3-hydroxyvalerate), and poly(3-hydroxybutyrate-co-4-hydroxybutyrate) are preferred since they are easy to industrially produce.

P3HB3HH is more preferred for the following reasons: its melting point and crystallinity can be changed by varying the proportions of the repeating units, and thus its physical properties such as Young's modulus and heat resistance can be adjusted and controlled to levels intermediate between those of polypropylene and polyethylene; and P3HB3HH is a plastic that is easy to industrially produce and useful in terms of physical properties. P3HA resins are characterized by being thermally decomposed easily under heating at 180°C or higher, and, in particular, P3HB3HH is preferred also in that it can have a low melting point and be moldable at low temperature.

Examples of commercially-available P3HB3HH include "Kaneka Biodegradable Polymer Green Planet™" of Kaneka Corporation.

The properties such as melting point and Young's modulus of P3HB3HV as mentioned above can be changed depending on the ratio between the 3-hydroxybutyrate component and the 3-hydroxyvalerate component. However, the crystallinity of P3HB3HV is as high as 50% or more because the two components are co-crystallized. Thus, P3HB3HV, albeit being more flexible than poly(3-hydroxybutyrate), cannot offer sufficient improvement in terms of brittleness.

In terms of ensuring both the strength of a film or a lamination layer of a laminate and the productivity in the production of the film or laminate, the average ratio between 3-hydroxybutyrate units and other hydroxyalkanoate units (3-hydroxybutyrate units/other hydroxyalkanoate units) in the total monomer units constituting the total P3HA resin component contained in the resin composition according to the present embodiment is preferably from 99/1 to 80/20 (mol%/mol%) and more preferably from 97/3 to 85/15 (mol%/mol%).

The average ratio between the different monomer units in the total monomer units constituting the P3HA resin component can be determined by a method known to those skilled in the art, such as a method described in paragraph [0047] of WO 2013/147139 A1. The "average ratio" refers to a molar ratio between the different monomer units in the total monomer units constituting the P3HA resin component, i.e., a molar ratio between the different monomer units contained in the total mixture of P3HA resins.

The P3HA resin component contained in the resin composition according to the present embodiment includes the following three P3HA resins differing in the proportions of the constituent monomers.

A copolymer (A) that is a copolymer of 3-hydroxybutyrate units and other hydroxyalkanoate units and in which the proportion of the other hydroxyalkanoate units is 24 mol% or more,

a copolymer (B) that is a copolymer of 3-hydroxybutyrate units and other hydroxyalkanoate units and in which the proportion of the other hydroxyalkanoate units is from 1 to less than 5 mol%, and

a copolymer (C) that is a copolymer of 3-hydroxybutyrate units and other hydroxyalkanoate units and in which the proportion of the other hydroxyalkanoate units is from 5 to less than 24 mol%.

As mentioned above, examples of the other hydroxyalkanoate units contained in the copolymer (A), (B), or (C) include 3-hydroxyhexanoate units, 3-hydroxyvalerate units, 4-hydroxybutyrate units, 3-hydroxyoctanoate units, and 3-hydroxyoctadecanoate units. The other hydroxyalkanoate units may include only one type of hydroxyalkanoate units or may include two or more types of hydroxyalkanoate units. The other hydroxyalkanoate units may be the same or different for the copolymers (A), (B), and (C). In particular, the other hydroxyalkanoate units of at least one or all of the copolymers (A), (B), and (C) are preferably 3-hydroxyhexanoate units.

The copolymer (A) is a low-crystallinity P3HA resin, and the copolymer (B) is a high-crystallinity P3HA resin. The copolymer (C) is a middle-crystallinity P3HA resin having a level of crystallinity intermediate between those of the copolymers (A) and (B).

In general, high-crystallinity P3HA resins are superior in terms of productivity but have low mechanical strength, while low-crystallinity P3HA resins have good mechanical properties although being inferior in terms of productivity. When high-crystallinity and low-crystallinity P3HA resins are used in combination, it is inferred that the high-crystallinity P3HA resin forms fine resin crystals and the low-crystallinity P3HA resin forms tie molecules that crosslink the resin crystals to one another. The combined use of the above three resins can enhance the strength of a film or a lamination layer of a laminate and improve the productivity in the production of the film or laminate.

The use of the low-crystallinity copolymer (A) can improve, in particular, the crack resistance of the film or lamination layer.

The proportion of 3-hydroxybutyrate units in the copolymer (A) is preferably lower than the average proportion of 3-hydroxybutyrate units in the total monomer units constituting the P3HA resin component.

The proportion of the other hydroxyalkanoate units in the copolymer (A) is preferably from 24 to 99 mol%, more preferably from 24 to 50 mol%, even more preferably from 24 to 35 mol%, and particularly preferably from 24 to 30 mol%.

The copolymer (A) is preferably poly(3-hydroxybutyrate-co-3-hydroxyhexanoate) or poly(3-hydroxybutyrate-co-4-hydroxybutyrate) and more preferably poly(3-hydroxybutyrate-co-3-hydroxyhexanoate).

The use of the high-crystallinity copolymer (B) can improve the ease of handling of the copolymer (A).

The proportion of 3-hydroxybutyrate units in the copolymer (B) is preferably higher than the average proportion of 3-hydroxybutyrate units in the total monomer units constituting the P3HA resin component.

The proportion of the other hydroxyalkanoate units in the copolymer (B) is preferably from 1 to less than 5 mol% and more preferably from 2 to 4 mol%.

The copolymer (B) is preferably poly(3-hydroxybutyrate-co-3-hydroxyhexanoate) or poly(3-hydroxybutyrate-co-4-hydroxybutyrate) and more preferably poly(3-hydroxybutyrate-co-3-hydroxyhexanoate).

The proportion of each of the copolymers (A) and (B) to the total amount of the copolymers (A) and (B) is not limited to a particular range. Preferably, the proportion of the copolymer (A) is from 40 to 90 wt% and the proportion of the copolymer (B) is from 10 to 60 wt%. More preferably, the proportion of the copolymer (A) is from 55 to 75 wt% and the proportion of the copolymer (B) is from 25 to 45 wt%.

The proportion of the copolymer (A) to the total amount of the P3HA resin component contained in the resin composition according to the present embodiment is preferably from 15 to 45 wt%. When the proportion is in this range, the copolymer (A) is more likely to exhibit its function, and the effect on reducing the thickness variation, or the neck-in in the TD direction, of the film or lamination layer can be more readily achieved even at an increased production speed. In order to further reduce the thickness variation, or the neck-in in the TD direction, of the film or lamination layer, the proportion is more preferably at least 20 wt%, even more preferably at least 25 wt%, and particularly preferably at least 27 wt%. The proportion is more preferably up to 43 wt%.

The use of the copolymer (C) in addition to the copolymers (A) and (B) accelerates the solidification of the P3HA resin component, thus allowing for an increase in the production speed in T-die film formation or extrusion lamination.

The proportion of the other hydroxyalkanoate units in the copolymer (C) is preferably from 5 to less than 24 mol%, more preferably from 5 to 22 mol%, even more preferably from 6 to 20 mol%, and particularly preferably from 6 to 18 mol%. The proportion may be up to 15 mol% or up to 10 mol%.

The copolymer (C) is preferably poly(3-hydroxybutyrate-co-3-hydroxyhexanoate) or poly(3-hydroxybutyrate-co-4-hydroxybutyrate) and more preferably poly(3-hydroxybutyrate-co-3-hydroxyhexanoate).

The proportion of the copolymer (C) to the total amount of the copolymers (A), (B), and (C) is not limited to a particular range but preferably from 1 to 99 wt%, more preferably from 5 to 90 wt%, and even more preferably from 8 to 85 wt%. The proportion may be at least 20 wt%, at least 30 wt%, or at least 40 wt%. The proportion may be up to 80 wt% or up to 70 wt%. In order to further reduce the thickness variation, or the neck-in in the TD direction, of the film or lamination layer, the proportion of the copolymer (C) is preferably 60 wt% or less, more preferably 55 wt% or less, and even more preferably 50 wt% or less.

The method for obtaining a blend of different P3HA resins is not limited to using a particular technique. A blend of different P3HA resins may be obtained by microbial production or chemical synthesis. Alternatively, a blend of two or more resins may be obtained by melting and kneading the resins using a device such as an extruder, a kneader, a Banbury mixer, or a roll mill or may be obtained by dissolving and mixing the resins in a solvent and drying the resulting mixture.

The weight-average molecular weight of the total P3HA resin component is not limited to a particular range. In terms of ensuring both the strength of the film or lamination layer and the productivity in the production of the film or laminate, the weight-average molecular weight is preferably from $10 \times 10^4$ to $200 \times 10^4$, more preferably from $15 \times 10^4$ to $100 \times 10^4$, and particularly preferably from $20 \times 10^4$ to $50 \times 10^4$. The weight-average molecular weight may be up to $40 \times 10^4$ or up to $30 \times 10^4$.

The weight-average molecular weight of the copolymer (A) which is a low-crystallinity resin is set in the range of $10 \times 10^4$ to $50 \times 10^4$. Limiting the weight-average molecular weight of the copolymer (A) to $50 \times 10^4$ or less makes it possible, in T-die film formation or extrusion lamination of the resin composition, to reduce the thickness variation or neck-in of the film or lamination layer even when the T-die film formation or extrusion lamination is performed at an increased production speed, thus allowing for high productivity. In addition, the fact that the weight-average molecular weight of the copolymer (A) is $10 \times 10^4$ or more makes it possible to ensure the strength of the film or lamination layer while ensuring the productivity. The weight-average molecular weight is preferably from $15 \times 10^4$ to $45 \times 10^4$ and more preferably from $20 \times 10^4$ to $40 \times 10^4$. The weight-average molecular weight may be at least $25 \times 10^4$ or at least $30 \times 10^4$.

The weight-average molecular weight of each of the copolymers (B) and (C) is not limited to a particular range.

The weight-average molecular weight of the copolymer (B) is preferably from $20 \times 10^4$ to $100 \times 10^4$, more preferably from $22 \times 10^4$ to $80 \times 10^4$, and even more preferably from $25 \times 10^4$ to $60 \times 10^4$. The weight-average molecular weight may be up to $50 \times 10^4$ or up to $40 \times 10^4$.

The weight-average molecular weight of the copolymer (C) is preferably from $10 \times 10^4$ to $250 \times 10^4$, more preferably from $15 \times 10^4$ to $200 \times 10^4$, and even more preferably from $20 \times 10^4$ to $150 \times 10^4$. The weight-average molecular weight may be up to $100 \times 10^4$, up to $50 \times 10^4$, up to $40 \times 10^4$, or up to $30 \times 10^4$.

The above-described weight-average molecular weights of the P3HA resins are those measured for the P3HA resins that have not yet been reacted with any organic peroxide.

The weight-average molecular weight of each resin can be determined as a polystyrene-equivalent molecular weight measured by gel permeation chromatography (GPC, "High-performance liquid chromatograph 20A system" manufactured by Shimadzu Corporation) using polystyrene gels ("K-G 4A" and "K806M" manufactured by Showa Denko K.K.) as columns and chloroform as a mobile phase. In this GPC, calibration curves are created using polystyrenes having weight-average molecular weights of 31,400, 197,000, 668,000, and 1,920,000. The columns used in the GPC may be any columns suitable for measurement of the molecular weight.

[Organic Peroxide]

In the poly(3-hydroxyalkanoate) resin component contained in the resin composition according to the present embodiment, at least one or all of the copolymers (A), (B), and (C) are reaction products resulting from modification through a reaction with an organic peroxide. This feature makes it possible, in T-die film formation or extrusion lamination of the resin composition, to reduce the thickness variation or neck-in of the film or lamination layer even when the T-die film formation or extrusion lamination is performed at an increased production speed, thus allowing for high productivity. In particular, in order to achieve a significant effect on reducing the thickness variation or neck-in, it is preferable that at least the copolymer (A), which is a low-crystallinity resin, be a reaction product resulting from a reaction with an organic peroxide.

Each of the copolymers (B) and (C) may be a reaction product resulting from a reaction with an organic peroxide or an unmodified copolymer that has not been reacted with any organic peroxide. In terms of the production of the resin composition, it is advantageous that the copolymer (B) as well as the copolymer (A) be a reaction product resulting from a reaction with an organic peroxide.

The copolymer (C) may be a reaction product or an unmodified copolymer. In terms of enhancing the crack resistance of the film or lamination layer or reducing the neck-in in the TD direction of the film or lamination layer, the copolymer (C) is preferably a reaction product. In terms of reducing the melt viscosity of the resin composition to improve the processability of the resin composition or further reducing the thickness variation during high-speed production, the copolymer (C) is preferably an unreacted copolymer.

Examples of the organic peroxide as mentioned above include diisobutyl peroxide, cumyl peroxyneodecanoate, di-*n*-propyl peroxydicarbonate, diisopropyl peroxydicarbonate, di-sec-butyl peroxydicarbonate, t-butyl peroxy-2-ethylhexanoate, 1,1,3,3-tetramethylbutyl peroxyneodecanoate, bis(4-t-butylcyclohexyl) peroxydicarbonate, bis(2-ethylhexyl) peroxydicarbonate, t-hexyl peroxyneodecanoate, t-butyl peroxyneodecanoate, t-butyl peroxyneoheptanoate, t-hexyl peroxypivalate, t-butyl peroxypivalate, di(3,5,5-trimethylhexanoyl) peroxide, dilauroyl peroxide, 1,1,3,3-tetramethylbutyl peroxy-2-ethylhexanoate, disuccinic acid peroxide, 2,5-dimethyl-2,5-bis(2-ethylhexanoylperoxy)hexane, t-hexyl peroxy-2-ethylhexanoate, di(4-methylbenzoyl) peroxide, dibenzoyl peroxide, t-butylperoxy-2-ethylhexyl carbonate, *t*-butylperoxyisopropyl carbonate, 1,6-bis(*t*-butylperoxycarbonyloxy)hexane, t-butyl peroxy-3,5,5-trimethylhexanoate, t-butyl peroxyacetate, t-butyl peroxybenzoate, t-amyl peroxy-3,5,5-trimethylhexanoate, 2,2-bis(4,4-di-*t*-butylperoxycyclohexyl) propane, and 2,2-di-*t*-butylperoxybutane. Among these, t-butylperoxy-2-ethylhexyl carbonate, *t*-butylperoxyisopropyl carbonate, and t-butyl peroxy-2-ethylhexanoate are preferred. One organic peroxide may be used alone, or two or more organic peroxides may be used in combination.

The amount of the organic peroxide used can be set as appropriate in view of the effect of the invention. The total amount of the organic peroxide used in the resin composition is preferably 1.0 parts by weight or less and particularly preferably 0.8 parts by weight or less per 100 parts by weight of the copolymer (A). The total amount of the organic peroxide used is preferably at least 0.1 parts by weight, more preferably at least 0.2 parts by weight, and even more preferably at least 0.3 parts by weight. In terms of reducing the neck-in in the TD direction or enhancing the crack resistance of the film or lamination layer, the total amount of the organic peroxide used is preferably 0.35 parts by weight or more, more preferably 0.40 parts by weight or more, and particularly preferably 0.50 parts by weight or more.

The weight-average molecular weight of each P3HA resin that has been reacted with the organic peroxide is preferably about $5 \times 10^4$ to $15 \times 10^4$ higher than the above-described weight-average molecular weight of the P3HA resin that has not yet been reacted with the organic peroxide. The method for measuring the weight-average molecular weight is as previously described.

The weight-average molecular weight of the copolymer (A) that has been reacted with the organic peroxide is preferably from about $15 \times 10^4$ to about $65 \times 10^4$, more preferably from about $20 \times 10^4$ to about $60 \times 10^4$, and particularly preferably from about $25 \times 10^4$ to about $55 \times 10^4$. The weight-average molecular weight may be at least $30 \times 10^4$.

The weight-average molecular weight of the total P3HA resin component containing the copolymer(s) that has (have) been reacted with the organic peroxide is preferably from $15 \times 10^4$ to $250 \times 10^4$, more preferably from $20 \times 10^4$ to $150 \times 10^4$, and particularly preferably from $25 \times 10^4$ to $60 \times 10^4$. When the weight-average molecular weight is $15 \times 10^4$ or more, the film or lamination layer tends to have higher strength. When the weight-average molecular weight is $250 \times 10^4$ or less, the processability tends to be further improved, and the molding tends to become easier.

The amount of the P3HA resin component in the resin composition according to the present embodiment is not limited to a particular range but preferably 20 wt% or more, more preferably 30 wt% or more, even more preferably 40 wt% or more, still even more preferably 60 wt% or more, and particularly preferably 70 wt% or more. When the amount of the P3HA resin component is 20 wt% or more, the resin composition tends to have better biodegradability. The upper limit of the amount of the P3HA resin component is not limited to a particular value, and the amount of the P3HA resin component may be up to 100 wt% or up to 99 wt%.

[Additional Resin]

The resin composition according to the present embodiment may contain a resin other than the P3HA resins (the other resin will be also referred to as the "additional resin"). The additional resin is not limited to a particular type and may be any resin that does not significantly diminish the compatibility, moldability, or mechanical properties exhibited by the resin composition in molding of the resin composition. In the case where the resin composition is used in an application that requires biodegradability which is a characteristic of the P3HA resins, the additional resin is preferably a biodegradable resin. Examples of the additional resin include: an aliphatic polyester having a structure formed by polycondensation of an aliphatic diol and an aliphatic dicarboxylic acid; and an aliphatic-aromatic polyester formed using both an aliphatic compound and an aromatic compound as monomers.

Examples of the aliphatic polyester include polyethylene succinate, polybutylene succinate (PBS), polyhexamethylene succinate, polyethylene adipate, polybutylene adipate, polyhexamethylene adipate, polybutylene succinate adipate (PBSA), polyethylene sebacate, and polybutylene sebacate.

Examples of the aliphatic-aromatic polyester include poly(butylene adipate-co-butylene terephthalate) (PBAT), poly(butylene sebacate-co-butylene terephthalate), poly(butylene azelate-co-butylene terephthalate), and poly(butylene succinate-co-butylene terephthalate) (PBST).

One additional resin may be used alone, or two or more additional resins may be used in combination.

The amount of the additional resin in the resin composition according to the present embodiment is not limited to a particular range but preferably 250 parts by weight or less, more preferably 100 parts by weight or less, and even more preferably 50 parts by weight or less per 100 parts by weight of the total amount of the P3HA resin component. The amount of the additional resin may be 30 parts by weight or less, 10 parts by weight or less, or 5 parts by weight or less. The lower limit of the amount of the additional resin is not limited to a particular value, and the amount of the additional resin may be 0 part by weight.

[Another Component (Additive)]

The resin composition according to the present embodiment may contain another component (an additive). Examples of the additive include: a colorant such as a pigment or dye; an odor absorber such as activated carbon or zeolite; a flavor such as vanillin or dextrin; and other additives such as a filler, a plasticizer, an oxidation inhibitor, an antioxidant, a weathering resistance improver, an ultraviolet absorber, a nucleating agent, a lubricant, a mold release agent, a water-repellent agent, an antimicrobial agent, and a slidability improver. The resin composition may contain only one additive or may contain two or more additives. The amount of these additives can be set as appropriate by those skilled in the art depending on the intended purpose of the resin composition.

The following will describe the nucleating agent, the lubricant, the filler, and the plasticizer in more detail.

(Nucleating Agent)

The resin composition may contain a nucleating agent. Examples of the nucleating agent include: polyhydric alcohols such as pentaerythritol, galactitol, and mannitol; and other compounds such as orotic acid, aspartame, cyanuric acid, glycine, zinc phenylphosphonate, and boron nitride. Among these, pentaerythritol is preferred because it is particularly superior in the accelerating effect on the crystallization of the poly(3-hydroxyalkanoate) resins. One nucleating agent may be used, or two or more nucleating agents may be used. The proportions of the nucleating agents used can be adjusted as appropriate depending on the intended purpose of the resin composition.

The amount of the nucleating agent used is not limited to a particular range but preferably from 0.1 to 5 parts by weight, more preferably from 0.5 to 3 parts by weight, and even more preferably from 0.7 to 1.5 parts by weight per 100 parts by weight of the total amount of the P3HA resin component.

(Lubricant)

The resin composition may contain a lubricant. Examples of the lubricant include behenamide, oleamide, erucamide, stearamide, palmitamide, N-stearyl behenamide, N-stearyl erucamide, ethylene bis(stearamide), ethylene bis(oleamide), ethylene bis(erucamide), ethylene bis(lauramide), ethylene bis(capramide), p-phenylene bis(stearamide), and a polycondensation product of ethylenediamine, stearic acid, and sebacic acid. Among these, behenamide and erucamide are preferred because they are particularly superior in the lubricating effect on the P3HA resins. One lubricant may be used, or two or more lubricants may be used. The proportions of the lubricants used can be adjusted as appropriate depending on the intended purpose of the resin composition.

The amount of the lubricant used is not limited to a particular range but preferably from 0.01 to 5 parts by weight, more preferably from 0.05 to 3 parts by weight, and even more preferably from 0.1 to 1.5 parts by weight per 100 parts by weight of the total amount of the P3HA resin component.

(Filler)

The resin composition may contain a filler. The inclusion of the filler can further enhance the strength of the film or lamination layer. The filler may be an inorganic filler or an organic filler or may be a combination of both. Examples of the inorganic filler include, but are not limited to, silicate salts, carbonate salts, sulfate salts, phosphate salts, oxides, hydroxides, nitrides, and carbon black. One inorganic filler may be used alone, or two or more inorganic fillers may be used in combination.

The amount of the filler is not limited to a particular range but preferably from 1 to 100 parts by weight, more preferably from 3 to 80 parts by weight, even more preferably from 5 to 70 parts by weight, and still even more preferably from 10 to 60 parts by weight per 100 parts by weight of the total amount of the P3HA resin component. The resin composition need not contain any filler.

(Plasticizer)

The resin composition may contain a plasticizer. The plasticizer is not limited to a particular type. In terms of the compatibility with the P3HA resins, an ester compound having an ester bond in the molecule is preferred for use.

Examples of ester compounds that can be used as the plasticizer include modified glycerin compounds, dibasic ester compounds, adipic ester compounds, polyether ester compounds, benzoic ester compounds, phthalic ester compounds, citric ester compounds, sebacic ester compounds, isosorbide ester compounds, and polycaprolactone compounds. Among these, modified glycerin ester compounds, dibasic ester compounds, adipic ester compounds, polyether ester compounds, citric ester compounds, sebacic ester compounds, and isosorbide ester compounds are preferred, and modified glycerin ester compounds are particularly preferred. One of the ester compounds as mentioned above may be used alone, or two or more thereof may be used in combination. When two or more ester compounds are used in combination, the mix proportions of the ester compounds can be adjusted as appropriate.

Preferred examples of the modified glycerin compounds include glycerin ester compounds. Glycerin ester compounds that can be used include monoesters, diesters, and triesters of glycerin. In terms of the compatibility with the P3HA resin component, triesters of glycerin are preferred. Among the triesters of glycerin, glycerin diacetomonoesters are particularly preferred. Specific examples of the glycerin diacetomonoesters include glycerin diacetomonolaurate, glycerin diacetomonooleate, glycerin diacetomonostearate, glycerin diacetomonocaprylate, and glycerin diacetomonodecanoate. Examples of the modified glycerin compounds include "RIKEMAL™" PL series and "BIOCIZER™" of Riken Vitamin Co., Ltd.

Specific examples of the dibasic ester compounds include dibutyl adipate, diisobutyl adipate, bis(2-ethylhexyl) adipate, diisononyl adipate, diisodecyl adipate, bis[2-(2-butoxyethoxy)ethyl] adipate, bis[2-(2-butoxyethoxy)ethyl] adipate, bis(2-ethylhexyl) azelate, dibutyl sebacate, bis(2-ethylhexyl) sebacate, diethyl succinate, and mixed dibasic ester compounds.

Examples of the adipic ester compounds include diethylhexyl adipate, dioctyl adipate, and diisononyl adipate.

Examples of the polyether ester compounds include polyethylene glycol dibenzoate, polyethylene glycol dicaprylate, and polyethylene glycol diisostearate.

Examples of the citric ester compounds include tributyl acetylcitrate.

Examples of the sebacic ester compounds include dibutyl sebacate.

In particular, in terms of the compatibility with the P3HA resins, the ester compound used is preferably a glycerin diester, more preferably a glycerin diacetomonoester, and even more preferably glycerin diacetomonolaurate.

The amount of the plasticizer is preferably from 0.1 to less than 20.0 parts by weight per 100 parts by weight of the total amount of the P3HA resin component. Adjusting the amount of the plasticizer to 0.1 parts by weight or more can improve the strength of the film or lamination layer and enable the laminate to have strength sufficient for practical use. Limiting the amount of the plasticizer to less than 20.0 parts by weight can lead to high productivity in the production of the film or laminate. Nevertheless, the resin composition need not contain any plasticizer. The amount of the plasticizer contained is preferably at least 0.2 parts by weight and more preferably at least 0.3 parts by weight. The amount of the plasticizer contained is preferably up to 10 parts by weight, more preferably up to 5 parts by weight, and even more preferably up to 1 part by weight.

[Melt Viscosity and Drawdown Time]

In the present application, the melt viscosity ($\eta$) and the drawdown time (t) of the resin composition according to the present embodiment are defined as follows.

Melt viscosity ($\eta$): A melt viscosity as measured using a capillary rheometer having a barrel with a furnace diameter of 0.955 mm and equipped with an orifice having a radius of 1 mm and a capillary length of 10 mm and mounted to the tip of the barrel at a barrel set temperature of 170°C, a volume flow rate of 0.716 cm$^3$/min, and a shear rate of 122 sec$^{-1}$.

Drawdown time (t): A time taken for the resin composition to fall 20 cm after being discharged from the orifice in the measurement of the melt viscosity.

The melt viscosity ($\eta$) of the resin composition according to the present embodiment may be set as appropriate and is not limited to a particular range. In order to reduce the resin pressure during T-die film formation or extrusion lamination and stabilize the production, the melt viscosity is preferably 1000 (Pa•s) or less, more preferably 600 (Pa•s) or less, and particularly preferably 500 (Pa•s) or less. In order to increase the degree of entanglement of molecular chains in T-die film formation or extrusion lamination and further reduce the thickness variation, or the neck-in in the TD direction, of the film or lamination layer, the melt viscosity is preferably at least 300 (Pa•s), more preferably at least 350 (Pa•s), and particularly preferably at least 400 (Pa•s).

The melt viscosity can be controlled in the above range by adjusting parameters such as the amount of the organic peroxide used, the molecular weight of each copolymer or the total P3HA resin component, and the proportions of the copolymers used.

The drawdown time (t) of the resin composition according to the present embodiment may be set as appropriate and is not limited to a particular range. The drawdown time is preferably up to 45 (sec), more preferably up to 40 (sec), and particularly preferably up to 35 (sec). The drawdown time is preferably at least 10 (sec), more preferably at least 14 (sec), and particularly preferably at least 20 (sec). Controlling the drawdown time in the above range tends to lead to a further reduction in thickness variation or neck-in during T-die film formation or extrusion lamination.

The drawdown time can be controlled in the above range by adjusting parameters such as the amount of the organic peroxide used, the molecular weight of each copolymer or the total P3HA resin component, and the proportions of the copolymers used.

In the resin composition according to the present embodiment, the ratio (t/$\eta$) of the drawdown time (t, sec) to the melt viscosity ($\eta$, Pa•S) is preferably from $3.4 \times 10^{-2}$ to $8.0 \times 10^{-2}$ (sec/[Pa•S]). The ratio (t/$\eta$) is more preferably up to $7.5 \times 10^{-2}$ (sec/[Pa•S]) and particularly preferably up to $7.0 \times 10^{-2}$ (sec/[Pa•S]). The ratio (t/$\eta$) is more preferably at least $3.5 \times 10^{-2}$ (sec/[Pa•S]), even more preferably at least $4.0 \times 10^{-2}$ (sec/[Pa•S]), and particularly preferably at least $5.0 \times 10^{-2}$ (sec/[Pa•S]).

When the ratio of the drawdown time (t) to the melt viscosity ($\eta$) is in the above range, the resin composition can have a good balance of melt viscosity and melt tension in T-die film formation or extrusion lamination, and this tends to allow for a reduction in thickness variation or neck-in and easy production of a film or lamination layer uniform in thickness or width.

<Method for Producing Resin Composition>

The resin composition according to the present embodiment can be produced by a method including at least the step of reacting part or all of the P3HA resin component with an organic peroxide. The use of the resin composition containing a reaction product produced by reacting at least one or all of the copolymers (A), (B), and (C) with the organic peroxide allows for production of a film or lamination layer suitable for use in a laminate, although the reason is unclear.

The reaction of the P3HA resin and the organic peroxide can be accomplished by the step of melting and kneading the P3HA resin and the organic peroxide together in an extruder (melting-kneading step). Alternatively, the reaction can be accomplished by the step of reacting the P3HA resin and the organic peroxide in a solution of the P3HA resin or an aqueous dispersion of the P3HA resin (liquid-phase reaction step).

In the melting-kneading step, the organic peroxide can be added in any form such as a solid or liquid. A solution or dispersion of the organic peroxide may be diluted with a diluent or the like, and the diluted solution or dispersion may be added. In the case where an ester compound is used as a plasticizer, an organic peroxide miscible with the ester compound (in particular, an organic peroxide that is liquid at room temperature (25°C)) is preferred because such an organic peroxide can be uniformly dispersed in the P3HA resin and because the use of the organic peroxide makes it easier to prevent a local modification reaction in the resin composition.

The P3HA resin used in the melting-kneading step may include at least one or all of the copolymers (A), (B), and (C). In particular, it is preferable to use the copolymer (A) and optionally the copolymer (B) and/or the copolymer (C). Each of the copolymers used is preferably a copolymer that has not been reacted with any organic peroxide.

In the melting-kneading step, the P3HA resin and the organic peroxide are introduced into an extruder, by which they are melted and kneaded. In addition to these components, other components as described above such as a nucleating agent, a lubricant, a filler, and a plasticizer may also be introduced into the extruder, by which the P3HA resin and the organic peroxide may be melted and kneaded together with the other components. However, in the present embodiment, the melting and kneading is preferably performed without addition of any crosslinking agent as disclosed in U.S. Patent No. 9034989 which has two or more radical-reactive functional groups (such as epoxy groups or carbon-carbon double bonds).

In the melting-kneading step, the P3HA resin, the organic peroxide, and the other components used as necessary, may be individually introduced into the extruder. Alternatively, all the components may be mixed together, and then the mixture may be introduced into the extruder. In particular, it is preferable that the organic peroxide and the P3HA resin be individually introduced into the extruder. This way of introduction offers the advantages of improving the dispersibility of the organic peroxide in the P3HA resin, reducing the formation of foreign substances in the resulting molded article, and enabling stable T-die film formation or extrusion lamination which gives films or lamination layers of good quality.

In the melting-kneading step, all of the P3HA resin component may be reacted with the organic peroxide. Alternatively, part of the P3HA resin component may be reacted with the organic peroxide to form a reaction product, then the rest of the P3HA resin may be added to the reaction product, and the mixture may be further melted and kneaded. In this case, the rest of the P3HA resin added to the reaction product does not react with the organic peroxide. In terms of productivity or improvement in properties, it is preferable to react part of the P3HA resin component with the organic peroxide and then add the rest of the P3HA resin to the reaction product.

The melting and kneading in the melting-kneading step described above can be accomplished according to a known or conventional method. For example, the melting and kneading can be carried out using a device such as an extruder (a single-screw or twin-screw extruder) or a kneader. The conditions of the melting and kneading are not limited to particular details and can be set as appropriate. Preferably, the resin temperature and the residence time are set such that the reaction of the organic peroxide can be completed during the melting and kneading. Specifically, the resin temperature as measured by a thermometer on the die is preferably up to 190°C, more preferably up to 180°C, and particularly preferably up to 170°C and is preferably at least 120°C, more preferably at least 125°C, and particularly preferably at least 130°C. The residence time in the extruder is preferably up to 700 seconds, more preferably up to 500 seconds, and particularly preferably up to 300 seconds and is preferably at least 40 seconds, more preferably at least 50 seconds, and particularly preferably at least 60 seconds.

The resin temperature and the residence time depend on the set temperature, the screw rotational speed, and the screw configuration of the extruder. For example, in order that the residence time at a resin temperature of 180°C will be 20 seconds or more or the residence time at a resin temperature of 170°C will be 60 seconds or more, it is preferable that a barrel zone where the barrel set temperature of the extruder ranges from 150 to 180°C be provided to extend over half or more of the extruder and that the screw rotational speed be set in the range of 80 to 200 rpm. If the resin temperature is higher than 180°C, deterioration of the P3HA resin could be accelerated. Thus, to prevent the residence time at a resin temperature of 180°C from being 60 seconds or more, it is preferable that, for example, a barrel zone where the barrel set temperature of the extruder ranges from 120 to 160°C be set to extend over half or less of the extruder. For facilitation of pelletization (e.g., pelletization by strand cutting or underwater cutting) of the resin exiting the die, the die set temperature is preferably in the range of, for example, 120 to 160°C so as to reduce failure of cutting or sticking together of pellets due to insufficient solidification.

The resin composition according to the present embodiment can be molded (subjected to molding) to obtain any kind of molded article (molded article produced by molding the resin composition for lamination according to the present embodiment). In particular, the resin composition according to the present embodiment is suitable for use in film production for laminate production or in a method for producing a laminate by direct extrusion lamination on a substrate. Thus, the use of the resin composition allows for successful production of a laminate by film bonding or extrusion lamination.

<Laminate Production Method>

A laminate produced using the resin composition according to the present embodiment can be, for example, but is not limited to being, produced by using a substrate layer such as a layer of paper and forming a P3HA resin-containing resin layer (lamination layer) on one or both sides of the substrate layer by a lamination method. The lamination method is a method in which a laminate is produced by pressure-bonding the P3HA resin-containing resin layer to the substrate layer by means of a pressure-bonding surface and then separating the P3HA resin-containing resin layer from the pressure-bonding surface. The pressure-bonding surface may be any surface that can pressure-bond the P3HA resin-containing resin layer and the substrate layer to each other. Examples of the pressure-bonding surface include the surface of a plate-shaped object or the surface of a roll.

The lamination method is not limited to using a particular technique. Specific examples include: extrusion lamination in which the molten P3HA resin-containing resin composition is extruded as a film from a T-die onto a separately fed substrate layer such as a layer of paper to directly laminate the substrate layer with the film, and then the film is cooled and pressure-bonded to the substrate layer by means of a cooling roll; and a lamination method in which a P3HA resin-containing film prepared in advance by a process such as melt extrusion molding using a T-die is placed on and pressure-bonded to the surface of a substrate layer (specific examples of such a method include thermal lamination, dry lamination, and non-solvent lamination).

(Substrate Layer)

The substrate layer as mentioned above is not limited to a particular type and may be any layer on which a layer of the resin composition according to the present embodiment can be formed. In terms of enhancing the overall biodegradability of the laminate, the substrate layer is preferably a biodegradable layer. The term "biodegradability" as used herein refers to the ability of a material to be decomposed into water and carbon dioxide by the action of microorganisms.

Examples of the biodegradable substrate layer include, but are not limited to, a layer of paper (composed mainly of cellulose), a layer of cellophane, a layer of cellulose ester, a layer of polyvinyl alcohol, a layer of polyamino acid, a layer of polyglycolic acid, and a layer of pullulan. A layer of paper or cellophane is preferred because such a layer has high heat resistance and is inexpensive, and a layer of paper is particularly preferred. The paper is not limited to a particular type, and the type of the paper can be selected as appropriate depending on the intended purpose of the laminate. Specific examples of the paper include cup paper, unbleached kraft paper, treated kraft paper such as bleached kraft paper or single-sided glossy kraft paper, high-quality paper, coated paper, tissue paper, glassine paper, and paperboard. The paper may, if necessary, contain an additive such as a waterproofing agent, a water-repellent agent, or an inorganic substance.

The substrate layer may be one subjected to a surface treatment such as corona treatment, plasma treatment, flame treatment, or anchor coat treatment in advance. One of such surface treatments may be performed alone, or two or more surface treatments may be used in combination.

In the case where a P3HA resin-containing resin layer is formed by the lamination method as described above, the heating temperature (hereinafter also referred to as the lamination temperature) in the lamination method is preferably such that the temperature reached by the resin composition according to the present embodiment during the lamination is equal to or higher than the melting point (Tm) of the resin composition and lower than a temperature 30°C above the melting point (Tm). The melting point refers to the top temperature of a melting point peak that appears in a higher temperature region than the other melting point peaks in a crystalline melting curve obtained by differential scanning calorimetry. If the lamination temperature is lower than the melting point, the resin tends not to be fluid enough, and the adhesion between the resin layer and the substrate layer tends to be insufficient. If the lamination temperature is equal to or higher than the temperature 30°C above the melting point, post-lamination solidification of the resin layer tends to be slow, with the result that the separability of the resin layer from the pressure-bonding surface tends to be insufficient. To be specific, the lamination temperature is preferably 160°C or higher, more preferably 165°C or higher, and particularly preferably 170°C or higher. The lamination temperature is preferably up to 180°C. Limiting the lamination temperature to 180°C or lower tends to prevent the lamination layer from suffering from a decline in mechanical strength due to thermal decomposition of the P3HA resin.

Regarding the lamination temperature, the temperature of a device used in the lamination may be set such that the temperature reached by the P3HA resin-containing resin composition during the lamination is within the range mentioned above. For example, in the case of extrusion lamination, the temperature of the T-die may be adjusted. In the case of thermal lamination, for example, the temperature of a heating roll used to bond the film to the substrate layer may be adjusted.

The surface temperature of the cooling roll in the extrusion lamination is not limited to a particular range and may be any freely chosen temperature at which the resin layer can be cooled and pressure-bonded to the substrate layer. The surface temperature of the cooling roll may be, for example, from 20 to 70°C and is preferably from 40 to 60°C. When the surface temperature of the cooling roll is in this range, the crystallization of the P3HA resin component is accelerated, with the result that the stickiness of the P3HA resin component to the cooling roll is reduced and the solidification can be completed in a short time.

The thickness of the film according to the present embodiment or the thickness of the lamination layer of the laminate according to the present embodiment is not limited to a particular range. In terms of ensuring sufficient flexibility of the film or lamination layer while preventing water absorption into the paper substrate layer, the thickness of the film or lamination layer is preferably from 5 to 300 μm and more preferably from 10 to 200 μm.

[Molded Article]

A molded article (hereinafter also referred to as the present molded article) can be produced using the laminate according to the present embodiment. Being formed from the laminate having a lamination layer uniform in thickness or width, the present molded article can be produced at high productivity and is advantageous for various purposes.

The present molded article is not limited to a particular product and may be any product including the present laminate. Examples of the present molded article include paper, a film, a sheet, a tube, a plate, a rod, a container (e.g., a bottle), a bag, and a part. In terms of addressing marine pollution, the present molded article is preferably a bag or a bottle.

In one embodiment of the present invention, the present molded article may be the present laminate itself or may be one produced by secondary processing of the present laminate.

The present molded article including the present laminate subjected to secondary processing is suitable for use as any of various kinds of packaging materials or containers such as shopping bags, various other kinds of bags, packaging materials for foods or confectionery products, cups, trays, and cartons. That is, the present molded article is suitable for use in various fields such as food industry, cosmetic industry, electronic industry, medical industry, and pharmaceutical industry. Since the present laminate contains a resin composition having high adhesion to the substrate and having good heat resistance, the present molded article is more preferably used as a container for a hot substance. Examples of such a container include: liquid containers such as, in particular, cups for foods or beverages such as instant noodles, instant soups, and coffee; and trays used for prepared foods, boxed lunches, or microwavable foods.

Any secondary processing as described above can be performed using a method identical to that used for secondary processing of conventional resin-laminated paper. That is, the secondary processing can be performed by means such as any kind of bag-making machine or form-fill-seal machine. Alternatively, the present laminate may be processed using a device such as a paper cup molding machine, a punching machine, or a case former. In any of these processing machines, any known technique can be used for bonding of the laminate. Examples of techniques that can be used include heat sealing, impulse sealing, ultrasonic sealing, high-frequency sealing, hot air sealing, and flame sealing.

The heat sealing temperature at which the present laminate is heat-sealed depends on the bonding technique employed. For example, in the case where the present laminate is heat-sealed using a heat sealing tester equipped with a sealing bar, the heat sealing temperature is typically 250°C or lower, preferably 200°C or lower, and more preferably 180°C or lower. When the heat sealing temperature is in this range, melting and leakage of the resin in the vicinity of the sealed portion can be avoided to ensure a suitable thickness of the resin layer and a suitable seal strength. In the case of using a heat sealing tester equipped with a sealing bar, the heat sealing temperature is typically at least 130°C, preferably at least 140°C, and more preferably at least 150°C. When the heat sealing temperature is in this range, suitable bonding can be ensured at the sealed portion.

The heat sealing pressure at which the present laminate is heat-sealed depends on the bonding technique employed. For example, in the case where the present laminate is heat-sealed using a heat sealing tester equipped with a sealing bar, the heat sealing pressure is typically 0.1 MPa or more and preferably 0.3 MPa or more. When the heat sealing pressure is in this range, suitable bonding can be ensured at the sealed portion. In the case of using a heat sealing tester equipped with a sealing bar, the heat sealing pressure is typically up to 0.5 MPa and preferably up to 0.45 MPa. When the heat sealing pressure is in this range, thinning of the sealed edge can be avoided to ensure a suitable seal strength.

In one embodiment of the present invention, the present molded article may, for the purpose of physical property improvement, be combined with another molded article (such as a fiber, a yarn, a rope, a woven fabric, a knit, a non-woven fabric, paper, a film, a sheet, a tube, a plate, a rod, a container, a bag, a part, or a foam) made of a material different from that of the present molded article. The material of the other molded article is also preferably biodegradable.

In the following items, preferred aspects of the present disclosure are listed. The present invention is not limited to the following items.

[Item 1]

A resin composition containing a poly(3-hydroxyalkanoate) resin component, wherein

the poly(3-hydroxyalkanoate) resin component includes:

a copolymer (A) that is a copolymer of 3-hydroxybutyrate units and other hydroxyalkanoate units and in which a proportion of the other hydroxyalkanoate units is 24 mol% or more;
a copolymer (B) that is a copolymer of 3-hydroxybutyrate units and other hydroxyalkanoate units and in which a proportion of the other hydroxyalkanoate units is from 1 to less than 5 mol%; and

a copolymer (C) that is a copolymer of 3-hydroxybutyrate units and other hydroxyalkanoate units and in which a proportion of the other hydroxyalkanoate units is from 5 to less than 24 mol%,

the copolymer (A) has a weight-average molecular weight of $10 \times 10^4$ to $50 \times 10^4$, and
at least one or all of the copolymers (A), (B), and (C) are reaction products resulting from a reaction with an organic peroxide.

[Item 2]

The resin composition according to item 1, wherein a proportion of the copolymer (A) to a total amount of the poly(3-hydroxyalkanoate) resin component is from 15 to 45 wt%.

[Item 3]

The resin composition according to item 1 or 2, wherein at least the copolymer (A) is a reaction product resulting from a reaction with the organic peroxide.

[Item 4]

The resin composition according to any one of items 1 to 3, wherein a total amount of the organic peroxide used in the resin composition is from 0.1 to 1.0 parts by weight per 100 parts by weight of the copolymer (A).

[Item 5]

The resin composition according to any one of items 1 to 4, wherein

a melt viscosity [n] of the resin composition is from 300 to 1000 Pa•S, and
the melt viscosity is a melt viscosity as measured using a capillary rheometer having a barrel with a furnace diameter of 0.955 mm and equipped with an orifice having a radius of 1 mm and a capillary length of 10 mm and mounted to a tip of the barrel at a barrel set temperature of 170°C, a volume flow rate of 0.716 cm$^3$/min, and a shear rate of 122 sec $^1$.

[Item 6]

The resin composition according to any one of items 1 to 5, wherein

a drawdown time of the resin composition is from 14 to 45 sec, and
the drawdown time is a time taken for the resin composition to fall 20 cm after being discharged from an orifice in melt viscosity measurement.

[Item 7]

The resin composition according to any one of items 1 to 6, wherein

a ratio (t/$\eta$) of a drawdown time [t] of the resin composition to a melt viscosity [n] of the resin composition is from $3.4 \times 10^{-2}$ to $8.0 \times 10^{-2}$ (sec/[Pa•S]),
the melt viscosity is a melt viscosity as measured using a capillary rheometer having a barrel with a furnace diameter of 0.955 mm and equipped with an orifice having a radius of 1 mm and a capillary length of 10 mm and mounted to a tip of the barrel at a barrel set temperature of 170°C, a volume flow rate of 0.716 cm$^3$/min, and a shear rate of 122 sec$^{-1}$, and
the drawdown time is a time taken for the resin composition to fall 20 cm after being discharged from the orifice in measurement of the melt viscosity.

[Item 8]

The resin composition according to any one of items 1 to 7, wherein the other hydroxyalkanoate units of at least one or all of the copolymers (A), (B), and (C) are 3-hydroxyhexanoate units.

[Item 9]

A film containing the resin composition according to any one of items 1 to 8.

[Item 10]

A laminate including:

a lamination layer containing the resin composition according to any one of items 1 to 8; and
a substrate layer.

[Item 11]

The laminate according to item 10, wherein the substrate layer is biodegradable.

[Item 12]

The laminate according to item 10 or 11, wherein the substrate layer is paper.

[Item 13]

A molded article including the laminate according to any one of items 10 to 12.

[Item 14]

A film production method including the step of molding the resin composition according to any one of items 1 to 8 by melt extrusion using a T-die.

[Item 15]

A laminate production method for producing the laminate according to any one of items 10 to 12, the laminate production method including the step of forming the lamination layer on at least one side of the substrate layer by extrusion lamination.

[Item 16]

A laminate production method for producing the laminate according to any one of items 10 to 12, the laminate production method including the steps of:

molding the resin composition into a film; and
placing the film on at least one side of the substrate layer and forming the lamination layer by dry lamination, non-solvent lamination, or thermal lamination.

**Examples**

Hereinafter, the present invention will be described in more detail based on examples. The present invention is not limited to the examples given below.
In the examples, the following materials were used.

(P3HA Resin Powders)

A-1: Poly(3-hydroxybutyrate-co-3-hydroxyhexanoate) (P3HB3HH) with a weight-average molecular weight of $36 \times 10^4$ which resulted from hydrolysis of P3HB3HH obtained according to a method described in Example 9 of WO 2019/142845 A1, having a 3-hydroxyhexanoate (3HH) content of 26.3 mol%, and having a standard polystyrene-equivalent weight-average molecular weight as measured by GPC of $70 \times 10^4$.
The molecular weight adjustment through hydrolysis was performed as follows: The P3HB3HH was placed in a metal container and then the metal container was placed in a pressure cooker tester (HAST CHAMBER EHS-221M manufactured by ESPEC Corp.), in which the P3HB3HH was treated at a temperature of 190 to 200°C for 1 to 2 hours.

A-2: P3HB3HH with a weight-average molecular weight of $33 \times 10^4$ which resulted from hydrolysis of P3HB3HH obtained according to a method described in Example 9 of WO 2019/142845 A1, having a 3HH content of 25.8 mol%, and having a standard polystyrene-equivalent weight-average molecular weight as measured by GPC of $68 \times 10^4$.

A'-1: P3HB3HH obtained according to a method described in Example 9 of WO 2019/142845 A1, having a 3HH content of 25.8 mol%, and having a standard polystyrene-equivalent weight-average molecular weight as measured by GPC of $68 \times 10^4$.

B-1: P3HB3HH with a weight-average molecular weight of $36 \times 10^4$ which resulted from hydrolysis of P3HB3HH obtained according to a method described in Example 2 of WO 2019/142845 A1, having a 3HH content of 2.1 mol%, and having a standard polystyrene-equivalent weight-average molecular weight as measured by GPC of $70 \times 10^4$.

B-2: P3HB3HH with a weight-average molecular weight of $33 \times 10^4$ which resulted from hydrolysis of P3HB3HH obtained according to a method described in Example 2 of WO 2019/142845 A1, having a 3HH content of 2.0 mol%, and having a standard polystyrene-equivalent weight-average molecular weight as measured by GPC of $68 \times 10^4$.

B-3: P3HB3HH obtained according to a method described in Example 2 of WO 2019/142845 A1, having a 3HH content of 2.0 mol%, and having a standard polystyrene-equivalent weight-average molecular weight as measured by GPC of $68 \times 10^4$.

C-1: P3HB3HH with a weight-average molecular weight of $22 \times 10^4$ which resulted from hydrolysis of P3HB3HH obtained according to a method described in Example 1 of WO 2019/142845 A1, having a 3-hydroxyhexanoate (3HH) content of 6.0 mol%, and having a standard polystyrene-equivalent weight-average molecular weight as measured by GPC of $63 \times 10^4$.

C-2: P3HB3HH obtained according to a method described in Example 1 of WO 2019/142845 A1, having a 3-hydroxyhexanoate (3HH) content of 6.0 mol%, and having a standard polystyrene-equivalent weight-average molecular weight as measured by GPC of $63 \times 10^4$.

C-3: P3HB3HH obtained according to a method described in Example 1 of WO 2019/142845 A1, having a 3-hydroxyhexanoate (3HH) content of 6.0 mol%, and having a standard polystyrene-equivalent weight-average molecular weight as measured by GPC of $42 \times 10^4$.

(Organic Peroxide)

D-1: Perbutyl I manufactured by NOF Corporation (tributylperoxyisopropyl monocarbonate, one-minute half-life temperature: 158.8°C)

(Plasticizer)

E-1: BIOCIZER manufactured by Riken Vitamin Co., Ltd.

(Additives)

 F-1: Pentaerythritol (Neulizer P manufactured by Mitsubishi Chemical Corporation)
 F-2: Behenamide (BNT-22H manufactured by Nippon Fine Chemical Co., Ltd.)

Evaluation methods carried out in Examples and Comparative Examples will be described.

[Melt Viscosity]

The melt viscosity ($\eta$) was measured using a capillary rheometer manufactured by Shimadzu Corporation. The capillary rheometer had a barrel with a furnace diameter of 0.955 mm and was equipped with an orifice having a radius of 1 mm and a capillary length of 10 mm and mounted to the tip of the barrel. The measurement was performed at a barrel set temperature of 170°C, a volume flow rate of 0.716 cm$^3$/min, and a shear rate of 122 sec$^{-1}$.

[Drawdown Time]

In the measurement of the melt viscosity, the time taken for the molten resin to fall 20 cm after being discharged from the orifice was measured as the drawdown time (DT).

In the case where melt fracture occurred and the drawdown time was not able to be accurately measured, the drawdown time was rated as "Not measurable".

[Evaluation of Film]

(Percentage Variation in Thickness)

The percentage variation in thickness of each film obtained was measured as follows. The thickness of the film was measured for a measurement spot of the film by means of a constant-pressure thickness gauge as specified in JIS K 2650. The measurement was performed at 6 to 9 points spaced at intervals of 5 cm in the TD direction (width direction). The arithmetic mean of the measured thickness values was calculated as an MD thickness in the measurement spot. Such an MD thickness was measured for 20 spots spaced at intervals of 5 cm in the MD direction. The percentage variation in thickness was calculated by the following equation using the median of the measured MD thickness values and the difference between the maximum and minimum (ΔMax - Min) of the MD thickness values.

Percentage variation in thickness (%) = (ΔMax - Min of MD thickness values)/(median of MD thickness values) $\times$ 100

The usability of the film as a lamination layer of a laminate was evaluated based on the calculated value of the percentage variation in thickness and rated according to the following criteria.
Excellent: The percentage variation in thickness is less than 20% (excellent usability).

Good: The percentage variation in thickness is from 20 to less than 25% (usable).
Average: The percentage variation in thickness is from 25 to less than 30% (generally usable but unusable depending on the intended purpose of the laminate).
Poor: The percentage variation in thickness is 30% or more (unusable).

(Percentage of Width Neck-in)

The width (the length in TD direction, mm) of each film obtained using a T-die having a die lip width T of 500 mm was measured for 20 spots spaced at intervals of 5 cm in the MD direction, and the neck-in percentage was calculated by the following equation using the median of the measured width values.

Neck-in percentage (%) = [die width (T) - median of film width values]/die width (T) $\times$ 100

The usability of the film as a lamination layer of a laminate was evaluated based on the calculated value of the neck-in percentage and rated according to the following criteria.

Excellent: The neck-in percentage is 25% or less (excellent usability).
Good: The neck-in percentage is from 26 to 35% (usable).
Average: The neck-in percentage is from 36 to 45% (generally usable but unusable depending on the intended purpose of the laminate).
Poor: The neck-in percentage is 46% or more (unusable).

[Evaluation of Laminate]

(Crack Resistance)

If a lamination layer of a laminate has a fine crack, the lamination layer can be colored by a chemical soaking into the crack. Taking advantage of this phenomenon, the crack resistance of each laminate produced was evaluated by the method described below.
The laminate was bent at 90° in the MD direction, with the lamination layer facing outward. Ageless seal check solution (manufactured by Mitsubishi Gas Chemical Company, Inc.) was applied to the bend of the laminate in a room temperature environment (15 to 25°C). After the application of the chemical, the bend was thoroughly dried and observed with a microscope at a magnification of 40 times. The crack resistance was evaluated based on the degree of coloring of the bend soaked with the chemical and was rated according to the criteria listed below. A bend was also formed in the TD direction, and the crack resistance was rated according to the same criteria.

Good: Little degree of coloring is found.
Average: A slight degree of coloring is found.
Poor: A considerable degree of coloring is found.

(Example 1)

<Production of P3HA Resin Pellets>

The P3HAs A-2 (24 parts by weight) and B-2 (16 parts by weight), the organic peroxide D-1 (0.105 parts by weight), the plasticizer E-1 (0.42 parts by weight), and the additives F-1 (1.0 parts by weight) and F-2 (0.5 parts by weight) were introduced into a co-rotating twin-screw extruder (TEM 26SS (L/D=60) manufactured by Toshiba Machine Co., Ltd.) through a main feeder, and the P3HA C-1 (60 parts by weight) was introduced into the co-rotating twin-screw extruder through a side feeder. The introduced materials were melted and kneaded at a barrel temperature of 140 to 160°C, a screw rotational speed of 100 rpm, and a discharge rate of 10 kg/hr. Each of the P3HAs (A-2 and B-2) introduced through the main feeder in this process is a reaction product resulting from a reaction with an organic peroxide. The strand obtained from the die was solidified by passing the strand through a water bath filled with hot water at 40 to 45°C. The solidified strand was cut by a pelletizer to obtain P3HA resin pellets 1. The obtained pellets were used to evaluate the melt viscosity and the drawdown time. The results are shown in Table 1. Table 1 further shows the weight-average molecular weight of each P3HA or the total P3HA resin component that had not yet been reacted with the organic peroxide.

<Production of Laminate by Thermal Lamination>

The P3HA resin pellets 1 were introduced into a single-screw extruder equipped with a T-die, and the resin material was extruded from the T-die under conditions where the resin temperature ranged from 163 to 167°C immediately after the extrusion. The extruded material was received on a cooling roll set to 60°C at a pulling speed (film processing speed) of 22 m/min or 45 m/min and thus molded into a film shape to obtain a P3HA film. The films obtained at the different processing speeds were evaluated for percentage variation in thickness and neck-in percentage. The results are shown in Table 1.

Each P3HA film obtained as above and substrate paper having a weight per square meter of 210 $g/m^2$ were pressed together between a heating roll contacting the paper surface and a cooling roll contacting the P3HA film, and the conditions were adjusted such that the P3HA film had a surface temperature of 170°C. In this manner, a laminate including a paper substrate and a lamination layer was obtained. The obtained laminate was evaluated for crack resistance. The results are shown in Table 1.

(Examples 2 to 5)

P3HA resin pellets 2 to 5, films, and laminates were produced in the same manner as the P3HA resin pellets, the films, and the laminates of Example 1, except that the formulation was changed as shown in Table 1. The produced pellets, films, and laminates were subjected to evaluation procedures which were the same as those in Example 1. The results are summarized in Table 1.

(Example 6)

P3HA resin pellets 6, films, and laminates were produced in the same manner as the P3HA resin pellets, the films, and the laminates of Example 1, except that the P3HA C-1 was introduced not through the side feeder but through the main feeder. The produced pellets, films, and laminates were subjected to evaluation procedures which were the same as those in Example 1. The results are summarized in Table 1.

Each of the P3HAs (A-2, B-2, and C-1) introduced through the main feeder in the process of melting and kneading is a reaction product resulting from a reaction with an organic peroxide.

(Comparative Example 1)

The P3HAs A-2 (24 parts by weight) and B-2 (16 parts by weight), the plasticizer E-1 (0.42 parts by weight), and the additives F-1 (1.0 parts by weight) and F-2 (0.5 parts by weight) were introduced into a co-rotating twin-screw extruder (TEM 26SS (L/D=60) manufactured by Toshiba Machine Co., Ltd.) through a main feeder, and the P3HA C-1 (60 parts by weight) was introduced into the co-rotating twin-screw extruder through a side feeder. The introduced materials were melted and kneaded at a barrel temperature of 140 to 160°C, a screw rotational speed of 100 rpm, and a discharge rate of 10 kg/hr. The strand obtained from the die was solidified by passing the strand through a water bath filled with hot water at 40 to 45°C. The solidified strand was cut by a pelletizer to obtain P3HA resin pellets 7.

<Production of Laminate by Thermal Lamination>

The P3HA resin pellets 7 were introduced into a single-screw extruder equipped with a T-die, and the resin material was extruded from the T-die under conditions where the resin temperature ranged from 163 to 167°C immediately after the extrusion. The extruded material was received on a cooling roll set to 60°C at a pulling speed (film processing speed) of 22 m/min or 45 m/min and thus molded into a film shape.

A molded film was obtained at a film processing speed of 22 m/min although the thickness variation was large. In the processing at a film processing speed of 45 m/min, a very large thickness variation occurred and the neck-in percentage was significantly high; thus, a film-shaped molded article was not obtained in a continuous way.

In an attempt to produce a laminate, the P3HA film obtained at a film processing speed of 22 m/min and substrate paper having a weight per square meter of 210 g/m$^2$ were pressed together between a heating roll contacting the paper surface and a cooling roll contacting the P3HA film. However, the large variation in thickness of the P3HA film precluded uniform lamination, resulting in a failure to obtain a desired laminate.

(Comparative Example 2)

The P3HAs A'-1 (36 parts by weight), B-3 (24 parts by weight), C-2 (10 parts by weight), and C-3 (30 parts by weight), the organic peroxide D-1 (0.8 parts by weight), the plasticizer E-1 (0.42 parts by weight), and the additives F-1 (1.0 parts by weight) and F-2 (0.5 parts by weight) were introduced into a co-rotating twin-screw extruder (TEM 26SS (L/D=60) manufactured by Toshiba Machine Co., Ltd.) through a main feeder, and the introduced materials were melted and kneaded at a barrel temperature of 140 to 160°C, a screw rotational speed of 100 rpm, and a discharge rate of 10 kg/hr. Each of the P3HAs (A'-1, B-3, C-2, and C-3) introduced through the main feeder in this process is a reaction product resulting from a reaction with an organic peroxide. The strand obtained from the die was solidified by passing the strand through a water bath filled with hot water at 40 to 45°C. The solidified strand was cut by a pelletizer to obtain P3HA resin pellets 8.

<Production of Laminate by Thermal Lamination>

The P3HA resin pellets 8 were introduced into a single-screw extruder equipped with a T-die, and the resin material was extruded from the T-die under conditions where the resin temperature ranged from 163 to 167°C immediately after the extrusion. The extruded material was received on a cooling roll set to 60°C at a pulling speed (film processing speed) of 22 m/min or 45 m/min and thus molded into a film shape.

Both in the processing at a film processing speed of 22 m/min and in the processing at a film processing speed of 45 m/min, a very large thickness variation occurred and the neck-in percentage was significantly high; thus, film-shaped molded articles were not obtained in a continuous way, and no desired laminates were obtained.

[Table 1]

| | | | | HH content (mol%) | Mw | Ex 1 | Ex. 2 | Ex. 3 | Ex. 4 | Ex. 5 | Ex. 6 | Comp. 1 | Comp. 2 |
|---|---|---|---|---|---|---|---|---|---|---|---|---|---|
| Resin composition | Formulation | P3HA (A) | A-1 | 26.3 | $36 \times 10^4$ | | 24 | 24 | 24 | 30 | | | |
| | | | A-2 | 25.8 | $33 \times 10^4$ | 24 | | | | | 24 | 24 | |
| | | P3HA (A') | A'-1 | 25.8 | $68 \times 10^4$ | | | | | | | | 36 |
| | | P3HA (B) | B-1 | 2.1 | $36 \times 10^4$ | | 16 | 16 | 16 | 20 | | | |
| | | | B-2 | 2.0 | $33 \times 10^4$ | 16 | | | | | 16 | 16 | |
| | | | B-3 | 2.0 | $68 \times 10^4$ | | | | | | | | 24 |
| | | **P3HA** (C) | C-1 | 6.0 | $22 \times 10^4$ | 60 | 60 | 60 | 60 | 50 | 60 | 60 | |
| | | | C-2 | 6.0 | $63 \times 10^4$ | | | | | | | | 10 |
| | | | C-3 | 6.0 | $42 \times 10^4$ | | | | | | | | 30 |
| | | Mw of total P3HA component before reaction | | | | $26 \times 10^4$ | $28 \times 10^4$ | $28 \times 10^4$ | $28 \times 10^4$ | $29 \times 10^4$ | $26 \times 10^4$ | $26 \times 10^4$ | $\mathbf{60 \times 10^4}$ |
| | | P3HAs as reaction products resulting from reaction with organic peroxide | | | | (A) + (B) | (A) + (B) | (A) + (B) | (A) - (B) | (A) + (B) | All P3HAs | - | All P3HAs |
| | | Organic peroxide (D-1) | | Parts per 100 parts of P3HA (A) or (A') | | 0.438 | 0.350 | 0.438 | 0.658 | 0.657 | 0.438 | - | 0.292 |
| | | Plasticizer (E-1) | | Parts per 100 parts of total P3HA component | | 0.42 | 0.42 | 0.42 | 0.42 | 0.42 | 0.42 | 0.42 | 0.42 |
| | | Additive (F-1) | | | | 1 | 1 | 1 | 1 | 1 | 1 | 1 | 1 |
| | | Additive (F-2) | | | | 0.5 | 0.5 | 0.5 | 0.5 | 0.5 | 0.5 | 0.5 | 0.5 |
| | Physical properties | Melt viscosity [η] | | Pa•s | | 454 | 445 | 357 | 361 | 451 | 540 | 394 | 1105 |
| | | Drawdown time [DT] | | sec | | 16 | 15 | 21 | 22 | 32 | 34 | 13 | 36 |
| | | DT/η | | sec/[Pa•s] | | 3.5E - 02 | 3.4E - 02 | 5.9E - 02 | 6.1E 02 | 7.1E - 02 | 6.3E - 02 | 3.3E - 02 | 3.3E - 02 |

| | | | HH content (mol%) | Mw | Ex 1 | Ex. 2 | Ex. 3 | Ex. 4 | Ex. 5 | Ex. 6 | Comp. 1 | Comp. 2 |
|---|---|---|---|---|---|---|---|---|---|---|---|---|
| Film processing speed 22 m/min | Thickness | Median of MD thickness values | μm | | 45 | 37 | 35 | 33 | 33 | 39 | 18 | Film molding was impossible |
| | | Maximum - Minimum of MD thickness values | μm | | 4 | 5 | 5 | 4 | 5 | 3 | 118 | |
| | | Percentage variation in thickness | % | | 8.9 | 13.5 | 14.3 | 12.1 | 15.2 | 7.7 | 655.6 | |
| | | Rating | | | Excellent | Excellent | Excellent | Excellent | Excellent | Excellent | Poor | |
| | Width | Median of width values | mm | | 300 | 293 | 345 | 352 | 390 | 382 | 280 | |
| | | Neck-in percentage | % | | 40 | 41 | 31 | 30 | 22 | 24 | 44 | |
| | | Rating | | | Average | Average | Good | Good | Excellent | Excellent | Average | |
| Film processing speed 45 m/min | Thickness | Median of MD thickness values | μm | | 36 | 37 | 42 | 29 | 29 | 35 | Film molding was impossible | Film molding was impossible |
| | | Maximum - Minimum of MD thickness values | μm | | 4 | 8 | 8 | 6 | 5 | 9 | | |
| | | Percentage variation in thickness | % | | 11.1 | 21.6 | 19.0 | 20.7 | 17.2 | 25.7 | | |
| | | Rating | | | Excellent | Good | Excellent | Good | Excellent | Average | | |
| | Width | Median of width values | mm | | 325 | 285 | 324 | 362 | 387 | 380 | | |
| | | Neck-in percentage | % | | 35 | 43 | 35 | 28 | 23 | 24 | | |
| | | Rating | | | Good | Average | Good | Good | Excellent | Excellent | | |
| Crack resistance of laminate | | Bend formed in MD direction | | | Good | Average | Good | Good | Good | Good | laminate production was impossible | Laminate production was impossible |
| | | Bend formed in TD direction | | | Poor | Poor | Poor | Average | Average | Average | | |

EP 4 682 203 A1

20

Table 1 reveals the following findings. In Examples 1 to 6, the thickness variation and the neck-in percentage were reduced, and films relatively uniform in thickness and width and laminates were successfully obtained. In Comparative Examples 1 and 2, the thickness variation was large or the neck-in percentage was high, so that films relatively uniform in thickness and width or laminates were difficult to obtain.

**Claims**

1.   A resin composition comprising a poly(3-hydroxyalkanoate) resin component, wherein

the poly(3-hydroxyalkanoate) resin component comprises:

a copolymer (A) that is a copolymer of 3-hydroxybutyrate units and other hydroxyalkanoate units and in which a proportion of the other hydroxyalkanoate units is 24 mol% or more;
a copolymer (B) that is a copolymer of 3-hydroxybutyrate units and other hydroxyalkanoate units and in which a proportion of the other hydroxyalkanoate units is from 1 to less than 5 mol%; and
a copolymer (C) that is a copolymer of 3-hydroxybutyrate units and other hydroxyalkanoate units and in which a proportion of the other hydroxyalkanoate units is from 5 to less than 24 mol%,

the copolymer (A) has a weight-average molecular weight of $10 \times 10^4$ to $50 \times 10^4$, and
at least one or all of the copolymers (A), (B), and (C) are reaction products resulting from a reaction with an organic peroxide.

2.   The resin composition according to claim 1, wherein a proportion of the copolymer (A) to a total amount of the poly(3-hydroxyalkanoate) resin component is from 15 to 45 wt%.

3.   The resin composition according to claim 1 or 2, wherein at least the copolymer (A) is a reaction product resulting from a reaction with the organic peroxide.

4.   The resin composition according to claim 1 or 2, wherein a total amount of the organic peroxide used in the resin composition is from 0.1 to 1.0 parts by weight per 100 parts by weight of the copolymer (A).

5.   The resin composition according to claim 1 or 2, wherein

a melt viscosity [$\eta$] of the resin composition is from 300 to 1000 Pa•S, and
the melt viscosity is a melt viscosity as measured using a capillary rheometer having a barrel with a furnace diameter of 0.955 mm and equipped with an orifice having a radius of 1 mm and a capillary length of 10 mm and mounted to a tip of the barrel at a barrel set temperature of 170°C, a volume flow rate of 0.716 cm$^3$/min, and a shear rate of 122 sec$^{-1}$.

6.   The resin composition according to claim 1 or 2, wherein

a drawdown time of the resin composition is from 14 to 45 sec, and
the drawdown time is a time taken for the resin composition to fall 20 cm after being discharged from an orifice in melt viscosity measurement.

7.   The resin composition according to claim 1 or 2, wherein

a ratio (t/$\eta$) of a drawdown time [t] of the resin composition to a melt viscosity [$\eta$] of the resin composition is from $3.4 \times 10^{-2}$ to $8.0 \times 10^{-2}$ (sec/[Pa•S]),
the melt viscosity is a melt viscosity as measured using a capillary rheometer having a barrel with a furnace diameter of 0.955 mm and equipped with an orifice having a radius of 1 mm and a capillary length of 10 mm and mounted to a tip of the barrel at a barrel set temperature of 170°C, a volume flow rate of 0.716 cm$^3$/min, and a shear rate of 122 sec$^{-1}$, and
the drawdown time is a time taken for the resin composition to fall 20 cm after being discharged from the orifice in measurement of the melt viscosity.

8.   The resin composition according to claim 1 or 2, wherein the other hydroxyalkanoate units of at least one or all of the copolymers (A), (B), and (C) are 3-hydroxyhexanoate units.

9. A film comprising the resin composition according to claim 1 or 2.

10. A laminate comprising:

    a lamination layer comprising the resin composition according to claim 1 or 2; and
    a substrate layer.

11. The laminate according to claim 10, wherein the substrate layer is biodegradable.

12. The laminate according to claim 10, wherein the substrate layer is paper.

13. A molded article comprising the laminate according to claim 10.

14. A film production method comprising the step of molding the resin composition according to claim 1 or 2 by melt extrusion using a T-die.

15. A laminate production method for producing the laminate according to claim 10, the laminate production method comprising the step of forming the lamination layer on at least one side of the substrate layer by extrusion lamination.

16. A laminate production method for producing the laminate according to claim 10, the laminate production method comprising the steps of:

    molding the resin composition into a film; and
    placing the film on at least one side of the substrate layer and forming the lamination layer by dry lamination, non-solvent lamination, or thermal lamination.

## INTERNATIONAL SEARCH REPORT

International application No.

**PCT/JP2024/008837**

| A. | CLASSIFICATION OF SUBJECT MATTER |
|---|---|

*C08L 67/04*(2006.01)i; *B29C 48/15*(2019.01)i; *B32B 27/10*(2006.01)i; *B32B 27/36*(2006.01)i; *C08J 5/22*(2006.01)i
FI:   C08L67/04; B32B27/36; B32B27/10; B29C48/15; C08J5/22 CFD

According to International Patent Classification (IPC) or to both national classification and IPC

| B. | FIELDS SEARCHED |
|---|---|

Minimum documentation searched (classification system followed by classification symbols)

C08L67/04; B29C48/15; B32B27/10; B32B27/36; C08J5/22

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022/044836 A1 (KANEKA CORP.) 03 March 2022 (2022-03-03)<br>claims, paragraph [0020], examples | 1-16 |
| X | JP 2022-185793 A (KANEKA CORP.) 15 December 2022 (2022-12-15)<br>claims, paragraph [0017], examples | 1-16 |
| A | WO 2022/054758 A1 (KANEKA CORP.) 17 March 2022 (2022-03-17)<br>claims, examples | 1-16 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 May 2024** | **04 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/008837**

| Patent document cited in search report | | | Publication date (day/month/year) | Patent family member(s) | | | Publication date (day/month/year) |
|---|---|---|---|---|---|---|---|
| WO | 2022/044836 | A1 | 03 March 2022 | US | 2023/0303828 | A1 | |
| | | | | claims, paragraph [0031], examples | | | |
| | | | | EP | 4206283 | A1 | |
| JP | 2022-185793 | A | 15 December 2022 | (Family: none) | | | |
| WO | 2022/054758 | A1 | 17 March 2022 | US | 2023/0312916 | A1 | |
| | | | | claims, examples | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010200697 A
- WO 2022044836 A1
- WO 2013147139 A1
- US 9034989 B
- WO 2019142845 A1